# EUROPEAN PATENT APPLICATION

(11) **EP 0 597 687 A1**
(43) Date of publication of application: **18.05.1994**
(21) Application number: 93308967.4
(22) Date of filing: 10.11.1993
(51) Int. Cl.: G06F 3/16

(54) **Method and apparatus for generating sound in a digital computer**

(30) Priority: 12.11.1992 US 975257
(71) Applicant: NCR International, Inc., Dayton, Ohio 45479 (US)
(72) Inventor: Burke, Thomas, Liberty, South Carolina 29657 (US)
(74) Representative: Robinson, Robert George

(57) **Abstract**

In an arrangement for generating sound or music, in a digital device, such as a computer, a Pulse-Width-Modulated (PWM) waveform is generated directly from digital data, and applied to a speaker. No electronic digital-to-analog conversion is necessary. The digital data can be a digitized recording of music, such as that contained on a commercially available compact disc.

## Description

This invention relates to the generation of sound in digital computers.

Sounds, such as speech and music, are generally classified as "continuous," or "analog," signals, rather than "digital" signals. Analog signals are commonly converted into digital signals for storage in computers and other digital apparatus. A simplified example will illustrate the conversion.

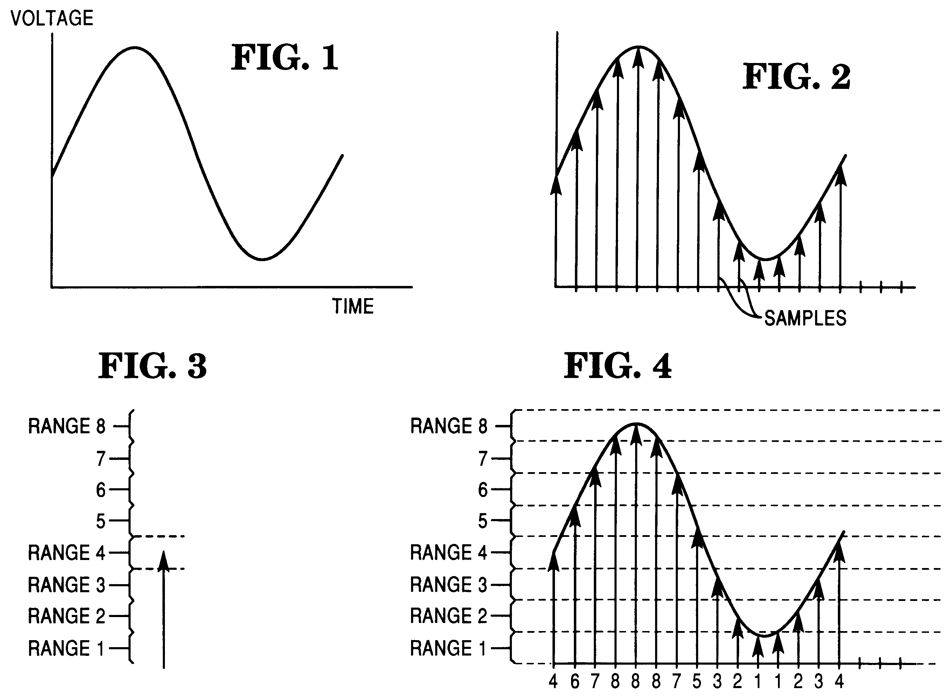

Figure 1 illustrates an analog signal, produced by a microphone (not shown), which records the sound. The signal is sampled at periodic intervals, as shown in Figure 2. Each sample produces a voltage, indicated by an arrow. The samples are then digitized: each sample is compared with a number of ranges, such as the eight ranges shown in Figure 3. The sample is given the value of the range within which it falls. In Figure 3, the sample falls within range 4, and is given the value 4.

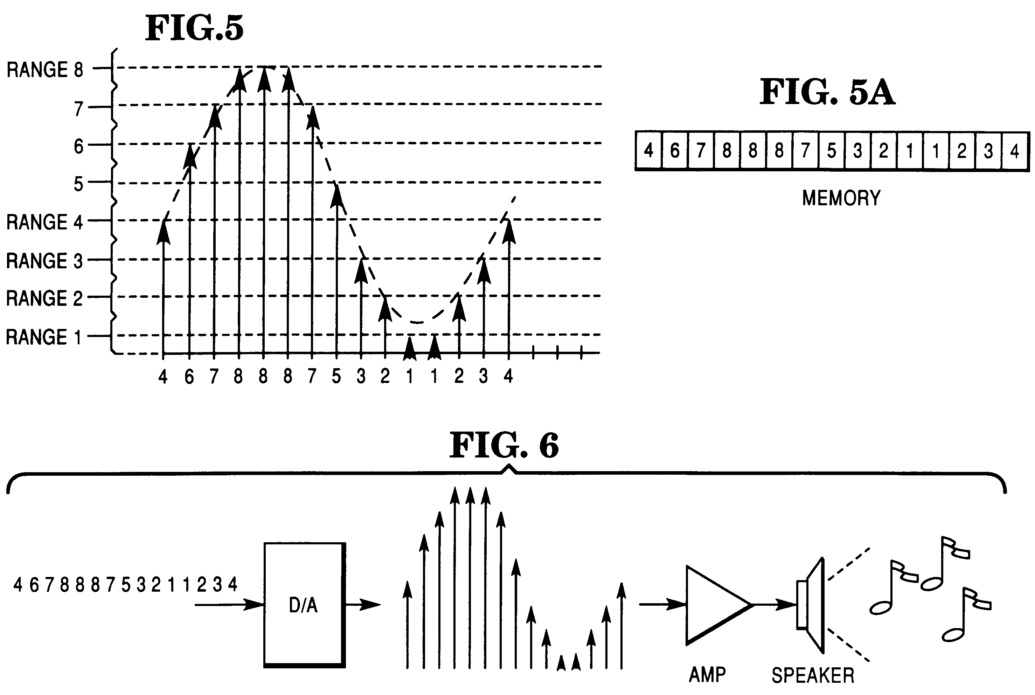

Digitizing of the entire analog signal is shown in Figure 4. The digitizing produces a sequence of numbers, namely 4, 6, 7, 8 . . . 3, 4, which is shown at the bottom of the Figure. The sequence is stored as binary numbers in memory, as shown in Figure 5A (for simplicity, the digitized signals are shown as decimal, not binary, numbers).
To reconstruct the sound, each binary number is read out of memory, in sequence, and fed to a Digital-to-Analog converter (D/A), shown in Figure 6. The D/A produces a voltage for each binary number.

One approach to producing the voltages is shown in Figure 5. For each binary number, the D/A produces the midpoint voltage of the range which the binary number represents. (That is, all 4's become 4.5, all 5's become 5.5, etc.) The D/A produces the sequence of voltages shown in Figure 5. (Of course, some error is introduced, as shown by the fact that the arrows do not exactly line up with the original analog signal, shown in phantom in Figure 5. The errors occur because each sample of Figure 2 has been "rounded" to the midpoint of its range.)

The sequence of voltages, indicated by the arrows in Figure 6, is fed to am amplifier AMP, which feeds a SPEAKER, which produces the sound.

D/A converters work very well. However, they can impose a cost burden on the PC. One reason is that the PC is largely a digital machine: most, if not all, of the functions performed within it are of the digital type. To incorporate an analog function, such as D/A conversion, requires additional analog circuits. Incorporation of analog circuits is expensive. It

It is an object of the present invention to provide a digital computer provided with a sound generation system, which is inexpensive to manufacture.

Therefore, according to one aspect of the present invention, there is provided a digital computer including an audio speaker, characterized by pulse supply means adapted to apply a train of pulse width modulated digital signals to said audio speaker, thereby causing audible sound to be produced by said audio speaker.

According to another aspect of the present invention, there is provided a method of producing sound from a speaker in a digital computer, characterized by the step of applying to said speaker a train of pulse width modulated pulses.

According to yet another aspect of the present invention, a method according to the invention is applied for use in a personal computer.

It is found that a digital computer according to the present invention can produce high quality sound by an arrangement which is purely digital thereby avoiding the expense of providing a digital-to-analog converter.

One embodiment of the present invention will now be described by way of example, with reference to the accompanying drawings, in which:-

Figures 1 - 6 illustrate principles of digital recording used in the prior art.

Figure 7 illustrates one view of the operation of the invention.

Figures 8 - 10 illustrate another view of the operation of the invention.

Figure 11 illustrates one form of the invention.

Figure 12 illustrates a PWM train produced by a PCM train.

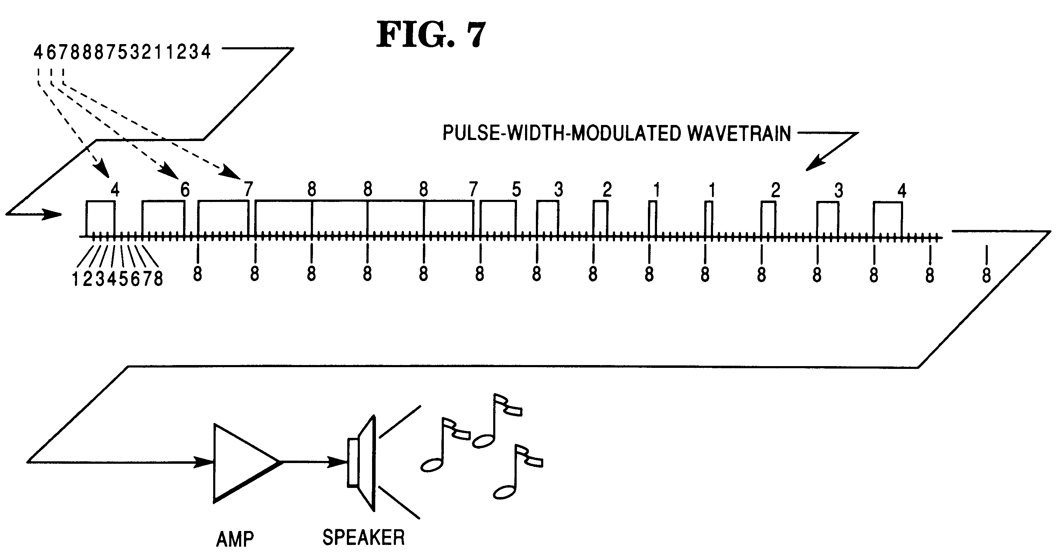

One view of the invention is shown in Figure 7. A sequence of digitized samples, such as those shown in Figure 5A, and repeated in Figure 7, is converted into a Pulse-Width-Modulated (PWM) wavetrain. That is, each digitized sample (ie, the 4, 6, 7, 8 . . . 3, 4) is converted into a pulse. Each pulse duration is proportional to the magnitude of the sample, as Figure 7 shows: the "4" sample produces a pulse which is 4 units long; the "6" sample produces a sample which is 6 units long.

The PWM train is fed to an amplifier AMP, which feeds a SPEAKER. (In some situations, the amplifier may not be necessary.)

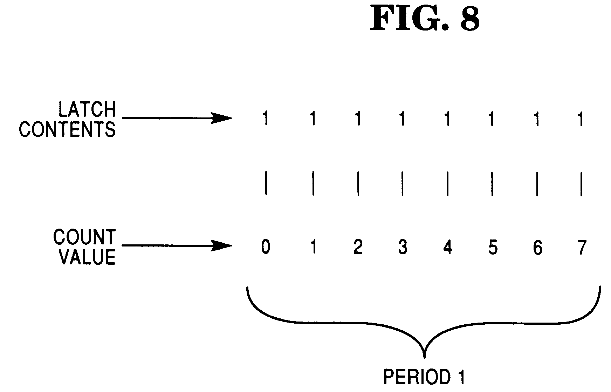

A more complex view of the invention is the following. Figure 8 illustrates one period of time. Two events occur during this period. One, a counter (not shown) counts from zero to 7, as indicated by the label COUNT VALUE. Two, a latch (also not shown) holds a number; this number in Figure 8 is "1," as indicated by the label LATCH CONTENTS.

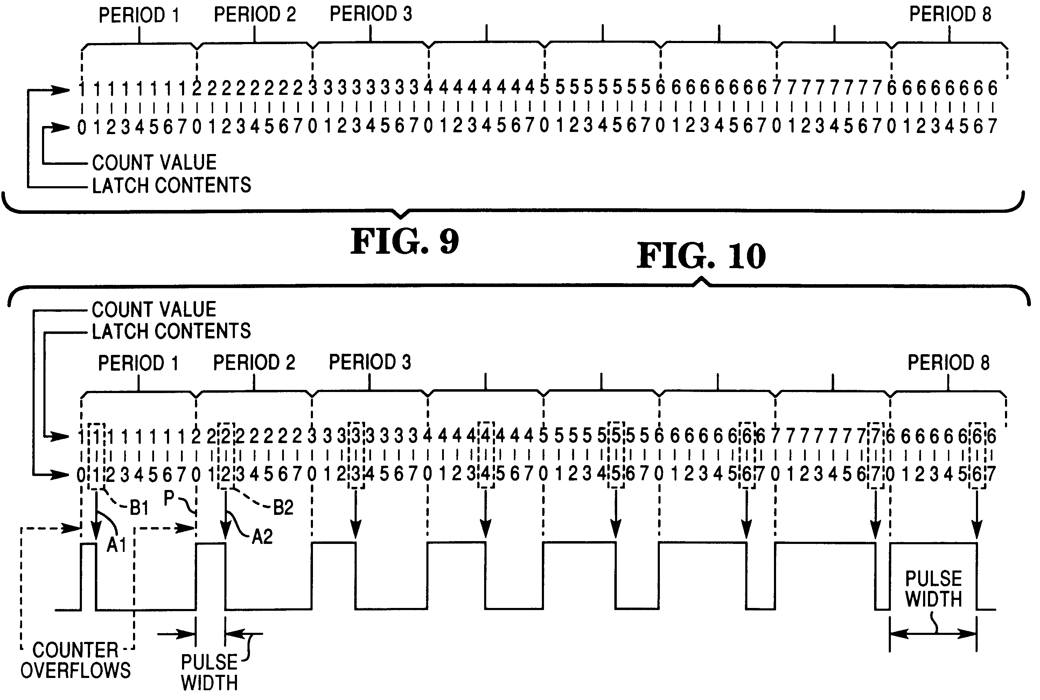

These two events are continually repeated, as shown in Figure 9 (although the LATCH CONTENTS are, in general, different for different periods). That is:
In PERIOD 1, the counter counts from 0 to 7; the latch holds the number 1.
In PERIOD 2, the counter again counts from 0 to 7; the latch holds a different number, namely, 2.
In PERIOD 3, the counter again counts from 0 to 7; the latch holds yet a different number, namely, 3,
and so on.

Each PERIOD is divided into two sub-periods. The division point is the time (shown in dashed boxes in Figure 10) when the COUNT VALUE equals the LATCH CONTENTS. A PWM pulse is initiated at every count value 0, and terminated at the division point, which lies in each dashed box.

For example, in PERIOD 1 in Figure 10, a PWM pulse begins at the leftmost 0, at the dashed line labelled COUNTER OVERFLOWS. When the LATCH CONTENTS equals the COUNT VALUE (in dashed box B1), the PWM pulse terminates.

Restated, prior to termination, the LATCH CONTENTS exceeded the COUNT VALUE. After termination, the converse occurred: the COUNT VALUE exceeds the LATCH CONTENTS.

Next, when the COUNT VALUE returns to 0 (at point P in Figure 10), the invention pulls the PWM signal HIGH again, as indicated. Now, another pulse begins.

Next, when the COUNT VALUE reaches the LATCH CONTENTS (in box B2), the invention pulls the PWM signal LOW.

The same procedure occurs for the remaining PERIODS in Figure 10:
1. The PWM signal is pulled HIGH when the counter overflows (that is, when the counter switches from 7 to 0).
2. Then, the PWM signal is pulled LOW when the COUNT VALUE reaches the LATCH contents.
3. Next, steps 1 and 2 are repeated, producing a sequence of pulses.

If the LATCH CONTENTS changes every period, as it does in Figure 10, then the PWM signal changes in duration for each period. Consequently, the PWM signal is a Pulse-Width-Modulated signal. The pulse duration (or width) is determined by the LATCH CONTENTS.

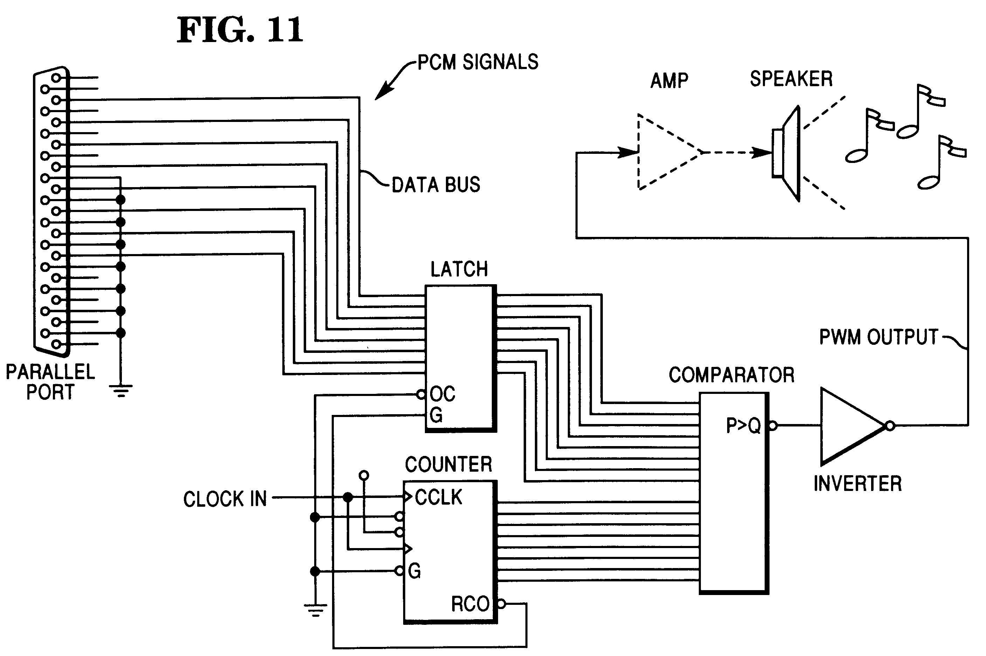

Figure 11 illustrates apparatus for producing the PWM signal described above. A LATCH receives an eight-bit word on a DATA BUS, which is shown connected to a 25 pin connector, such as a parallel port of a personal computer. The LATCH presents the word to inputs of a digital COMPARATOR.

The COMPARATOR receives another eight-bit word from a COUNTER (which produces the COUNT VALUE shown in Figures 9 and 10). The COMPARATOR compares the LATCH CONTENTS with the COUNTER VALUE. Until the latter reaches the former, the COMPARATOR output is LOW, causing the INVERTER's output to be HIGH. This HIGH condition is indicated at each COUNTER OVERFLOW designated in Figure 10.

When the COUNT VALUE reaches the LATCH CONTENTS, the COMPARATOR output goes HIGH, causing the INVERTER to go LOW. (This event occurs at every arrow, such as A1, in Figures 9 and 10).

Prior to each overflow of the COUNTER, the DATA BUS presents another eight-bit word to the LATCH. When the COUNTER overflows, a signal occurs on line RCO, causing the LATCH to grab the new eight-bit word.

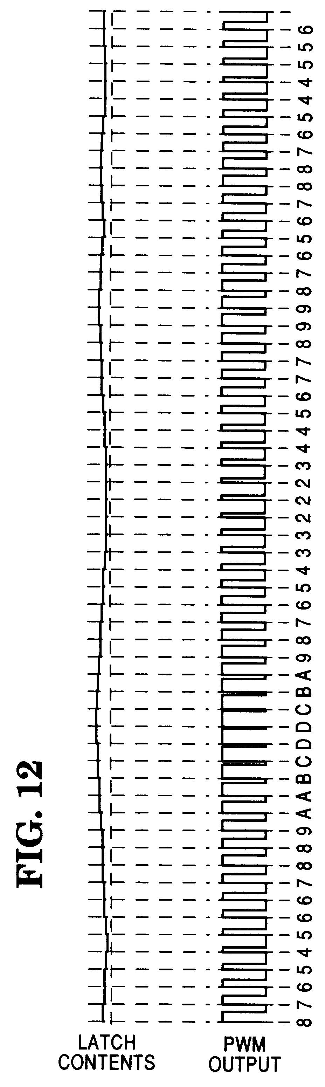

Figure 12 illustrates a sequence of LATCH CONTENTS, and the corresponding PWM output. The PWM output, which can be produced by the apparatus of Figure 11, is applied to an audio transducer, such as a SPEAKER in Figure 11, perhaps through an intermediate amplifier, indicated in phantom and labelled AMP.

Some additional considerations will now be discussed in the following renumbered paragraphs.
1. It was assumed that the COMPARATOR in Figure 11 switched states when the COUNT VALUE reached the LATCH CONTENTS. However, the COMPARATOR can be designed to switch states when the COUNT VALUE exceeds the LATCH CONTENTS.
2. In the above discussion, each counter overflow caused the PWM signal to go HIGH. However, the opposite sequence can occur: each overflow can cause the PWM signal to go LOW, and then, when the COUNT VALUE reaches the LATCH CONTENTS, the PWM signal will go HIGH.
3. For an eight-bit COUNTER, a CLOCK IN signal in Figure 11 of 50 MegaHertz produces an overflow signal on line RCO of 19.5 Kilohertz (ie, 50,000,000/256 = 19,500). Accordingly, the LATCH CONTENTS changes at this same rate of 19.5 KHz. Each PERIOD in Figures 9 and 10 is then 1/19,500 second long, which equals 5.12 microseconds. Signals on line RCO in the range of 5 KHz to 100 KHz are contemplated.
4. The preceding discussion has assumed that the counter increments, as in the sequence 0, 1, 2, 3 . . . However, decrementing counters can be used, as in 7, 6, 5 . . .
5. In Figure 11 (and implicitly shown in Figure 7), a Pulse-Code-Modulated (PCM) wavetrain is applied to the LATCH. A sequence of PWM (not PCM) signals is derived from the PCM sequence.
6. The PCM signals applied to the LATCH in Figure 11 can be commercially available sampled signals, such as those available on a compact disc recording of voice or music. The invention reproduces the music or voice, using the sequence of PWM signals, without D/A circuitry. However, D/A conversion does occur, but is believed to reside in a complex interaction of factors, such as speaker inductance, speaker mass, air mass, and limitations of the human ear. The D/A conversion is mechanical. The invention performs no significant D/A function electronically.
7. The sampling rate of PCM signals applied to the LATCH in Figure 11 should be comparable to that of the recorded sound. For example, if the recorded sound contains 40,000 samples/second, then approximately 40,000 samples per second should be fed to the LATCH in Figure 11. Otherwise, the speed of the reproduction will not match that of original sound, and other distortions may occur.
8. The preceding discussion has been framed in terms of reproduction of recordings of sound. However, the invention is also applicable to synthesis of sound. For example, the PC can generate the proper sequence of words for the LATCH, based on an algorithm, or based on a library of phonemes. The data delivered to the LATCH need not be derived from actual sound.
9. The invention produces sound or music from a speaker, such as a speaker in a PC, by applying a train of pulses, all of which have the same amplitude, but different durations.
10. The A/D conversion described in connection with Figure 3 assumed eight levels. Of course, higher resolution is preferable, such as by using 256, 512, or more, levels.

## Claims

1. A digital computer including an audio speaker, characterized by pulse supply means adapted to apply a train of pulse width modulated digital signals to said audio speaker, thereby causing audible sound to be produced by said audio speaker.

2. Apparatus according to claim 1, characterized in that said pulse supply means includes conversion means adapted to convert s sequence of pulse code modulated digital signals to said train of pulse width modulated digital signals.

3. Apparatus according to claim 2, characterized in that said conversion means includes latch means adapted to hold a multi-bit data word derived from pulse code modulated digital signals, counter means adapted to count clock pulses, and comparator means adapted to compare the contents of said latch means and the contents of said counter means and to provide said train of pulse width modulated digital signals.

4. Apparatus according to claim 3, characterized in that said comparator is adapted to provide a first type of binary signal when the contents of said counter means is less than the multi-bit data word stored in said latch means, and a second type of binary signal when the contents of said counter means is greater than the multi-bit data word stored in said latch means.

5. Apparatus according to claim 4, characterized in that said latch means is a coupled to a parallel port of a personal computer.

6. Apparatus according to any one of claims 2 to 5, characterized in that said pulse code modulated digital signals are derived from digitally recorded sound.

7. A method of producing sound from a speaker in a digital computer, characterized by the step of applying to said speaker a train of pulse width modulated pulses.

8. A method according to claim 7, characterized by the step of deriving said train of pulse width modulated pulses from a sequence of pulse code modulated digital signals.

9. The use of a method according to claim 7 or claim 8 in a personal computer.
